(19) **Europäisches Patentamt / European Patent Office / Office européen des brevets**

(11) **EP 3 447 982 A1**

(12) # EUROPEAN PATENT APPLICATION

(43) Date of publication:
**27.02.2019 Bulletin 2019/09**

(51) Int Cl.:
**H04L 27/26** (2006.01)

(21) Application number: **17188008.1**

(22) Date of filing: **25.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Catena Holding bv**
**2628 XG Delft (NL)**

(72) Inventor: **Van Houtum, Wilhelmus Johannes**
**5692 GA Son (NL)**

(74) Representative: **Hardingham, Christopher Mark**
**NXP SEMICONDUCTORS**
**Intellectual Property Group**
**Abbey House**
**25 Clarendon Road**
**Redhill, Surrey RH1 1QZ (GB)**

(54) **PEAK TO AVERAGE POWER RATIO REDUCTION METHOD**

(57)    An apparatus (500) and method (100) of reducing the peak-to-average power ratio of a multi-carrier signal (200), wherein the multi-carrier signal includes a plurality of in-band sub-carriers in a defined frequency band, between a first frequency and a second frequency, wherein a data payload is delivered in payload sub-carriers, the payload sub-carriers being a sub-set of the plurality of in-band sub-carriers, the method (100) including: processing (101) an input multi-carrier signal (200, 300) carrying a data payload to form an extended signal (206) with out-of-band spectrum available, outside the defined frequency band; detecting (102) a location and value of the maximum amplitude peak (210, 306) of the extended signal (206), in the time domain; and processing (106) the extended signal (206), based on the detected location and value of the maximum amplitude peak (210, 306), in order to reduce the value of the maximum amplitude peak below an amplitude threshold (304), to form a modified multi-carrier signal (204, 308), such that the modified multi-carrier signal (204, 308) carries the data payload from the input multi-carrier signal (200), and has a lower peak-to-average power ratio than the input multi-carrier signal (200); wherein processing the extended signal generates signal artefacts (202); and wherein the signal artefacts (202) are only provided in frequencies outside the defined frequency bandwidth of the input signal.

FIG. 5

**Description**

Field

The present disclosure relates to a method for reducing the peak-to-average power ratio (PAPR) of a multi-carrier signal.

Background

Conventional RF-amplifiers have a generally linear relationship between input power and efficiency, and between input power and output power, during normal operation. With increasing input power, the RF-amplifier is driven into saturation where the relationship between input power and output power is non-linear. It is inefficient to operate an RF-amplifier past the saturation point, where it is no longer linear in its operation.

RF signals often have a high PAPR (sometimes 8dB or higher), especially when used in communications systems. To ensure that an RF-amplifier is operated in the linear region across the whole power range of an RF input signal, the RF-amplifier is operated at input power reduced from the saturation point. This is known as operating the RF-amplifier in back-off mode.

Summary

There is provided a method of reducing the peak-to-average power ratio of a multi-carrier signal, wherein the multi-carrier signal includes a plurality of in-band sub-carriers in a defined frequency band, defined between a first frequency and a second frequency, wherein a data payload is delivered in payload sub-carriers, the payload sub-carriers being a sub-set of the plurality of in-band sub-carriers, the method including: processing an input multi-carrier signal carrying a data payload to form an extended signal with out-of-band spectrum available, outside the defined frequency band; detecting a location and value of the maximum amplitude peak of the extended signal, in the time domain; and processing the extended signal, based on the detected location and value of the maximum amplitude peak, in order to reduce the value of the maximum amplitude peak below an amplitude threshold, to form a modified multi-carrier signal, such that the modified multi-carrier signal carries the data payload from the input multi-carrier signal, and has a lower peak-to-average power ratio than the input multi-carrier signal; wherein processing the extended signal generates signal artefacts; and wherein the signal artefacts are only provided in frequencies outside the defined frequency bandwidth of the input signal.

Reducing the PAPR allows an amplifier used to amplify the signal to operate with reduced back-off. Since the amplifier is operated closer to its saturation point, it can operate at higher efficiency, while still remaining linear over the whole input power range. Only using out-of-band frequency components for the signal artefacts generated by the PAPR reduction means the data payload is unaffected, and the unused sub-carriers are still provided. The method is low complexity and simple to implement, and thus has low processing, and memory requirements.

It may be forbidden to use the in-band sub-carriers for the signal artefacts.

Processing the extended signal in order to reduce the value of the maximum amplitude peak below an amplitude threshold may comprise: applying a transmit spectrum mask to define the frequency of the signal artefacts. The transmit spectrum mask may define a threshold power amplitude; and wherein the transmit spectrum mask may allow power to be transmitted below the threshold power amplitude, such that it limits the amplitude of the modified multi-carrier signal.

The power transmitted according to the transmit spectrum masks may vary as a function of frequency for at least a range of frequencies, and may decrease away from the first frequency and the second frequency. The transmit spectrum mask includes one or more portions where the power transmitted according to the mask decreases linearly away from the first frequency; and one or more portions where the power transmitted decreases linearly away from the second frequency.

Processing an input multi-carrier signal carrying a data payload to form an extended signal may comprise oversampling the input multi-carrier signal. Processing an input multi-carrier signal carrying a data payload to form an extended signal may comprise oversampling the input multi-carrier signal by a factor of two or more.

The method may include: detecting a location and value of two or more peaks in the extended signal, in the time domain; and processing the extended signal, based on the detected location and value of the detected peaks, in order to reduce the amplitude of the detected peaks below an amplitude threshold, to form the modified multi-carrier signal, wherein signal artefacts from the processing are only provided in frequencies outside the defined frequency bandwidth of the input signal.

At least some of the plurality of in-band sub-carriers may be null carriers, not used for delivering the data-payload.

There is also provided a method of amplifying a multi-carrier signal, the method comprising: receiving a multi-carrier input signal, the multi-carrier input signal having a peak-to-average power ratio; reducing the peak to average power ratio of the received multi-carrier signal according to the method discussed above, to form an amplifier input signal; and amplifying the amplifier input signal, wherein the amplifier is operated at back-off.

There is further provided a peak to average power reduction apparatus configured to perform the method discussed above.

There is yet further provided and amplifier comprising the peak to average power reduction apparatus discussed above, wherein the amplifier is configured to perform the method discussed above, and wherein an operational bandwidth of the amplifier is at least twice the bandwidth of the input signal.

There is provided a computer readable storage medium comprising instructions which cause an apparatus to perform the method discussed above.

There is also provided a multi-carrier signal having a peak to average power ratio reduced in accordance with the method discussed above.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as nonlimiting examples. The software implementation may be an assembly program.

The computer program may be provided on a computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

Brief description of Drawings

Embodiments will be described, by way of example only, with reference to the drawings, in which

Figure 1 illustrates a method for reducing the PAPR of an input signal;
Figure 2A illustrates an example input signal;
Figure 2B illustrates an example signal clipping vector;
Figure 2C illustrates the example input signal of Figure 2A, modified by the signal clipping vector of Figure 2B;
Figure 3A illustrates an example input signal compliant with the IEEE802.11 standard, in the frequency domain;
Figure 3B illustrates the signal of Figure 3A with out-of-band spectrum available outside the defined frequency band;
Figure 3C illustrates the signal of Figure 3B, following PAPR reduction;
Figure 3D illustrates a further example input signal compliant with the IEEE802.11 standard, in the time domain;
Figure 3E illustrates the signal of Figure 3D, with the PAPR reduced;
Figure 4A illustrates the back-off reduction that can be achieved with a reduced PAPR over 1500 iterations;
Figure 4B illustrates the first 50 iterations of Figure 4A; and
Figure 5 illustrates a PAPR apparatus that is arranged to implement the method of Figure 1.

Detailed description of embodiments

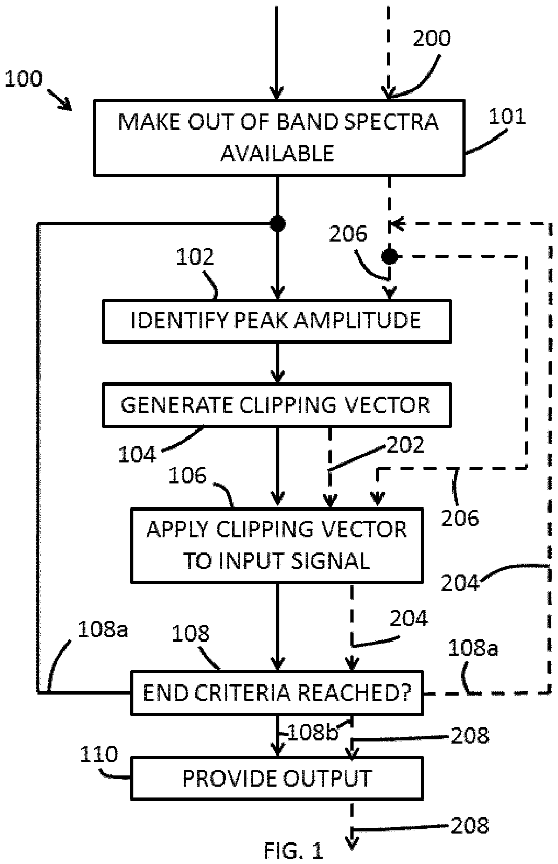

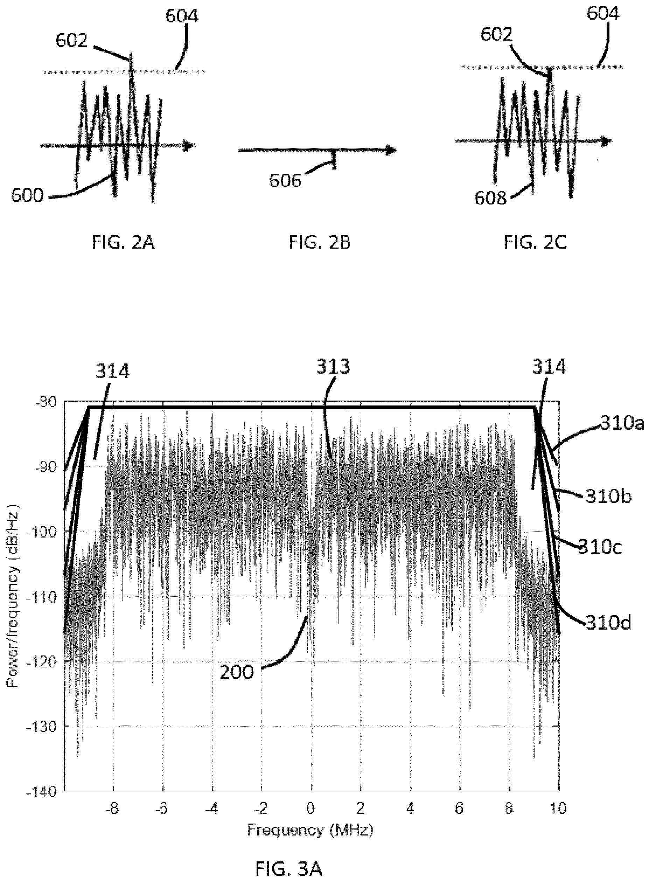

Figure 1 and Figure 2 illustrate a method 100 for reducing the PAPR of an input signal 200, prior to the signal being amplified. The input signal 200 is a multi-carrier signal having a defined bandwidth extending between a lower (first) frequency and an upper (second) frequency. In one example the lower and upper frequencies may be defined in absolute values (for example 580MHz to 600MHz), whilst in other examples, the bandwidth may be defined by reference to a central frequency (for example 590MHz $\pm$ 10MHz).

In the frequency domain, the bandwidth of the input signal 200 is split into sub-carriers (for example N sub-carriers), each occupying a sub-range of the available frequencies. The sub-carriers within the defined bandwidth of the signal are referred to as "in-band" sub-carriers. A sub-set of the in-band sub-carriers are used for delivering a data payload, whilst at least some of the in-band sub-carriers not used for delivering the data payload. The in-band sub-carriers are not used for the data payload may be referred to as unused sub-carriers, null carriers, non-payload carriers or reserved tones. It will be understood that these terms may be used interchangeably. However, for simplicity, the carriers not used for data payload will be referred to as unused in-band sub-carriers in the below description.

The unused in-band sub-carriers may have their value set to zero before PAPR reduction, or may have any other suitable value. While not used for data payload, these unused in-band sub-carriers may still have other uses in the signal and are still a part of the input-signal.

The solid arrows in Figure 1 illustrate the progression of the method 100. The dashed arrows in Figure 1 indicate which signals or data are used and passed on in the different steps of the method 100. The method starts within an input signal 200, and then provides an output signal 208 at the end.

The input signal 200 does not exist at frequencies outside of its defined bandwidth. The input signal 200 is a time slice taken from a longer input signal and the method 100 is repeated for every time slice of the input signal.

In general, the method 100 makes out-of-band spectrum frequencies available, by forming an extended signal 206. The method 100 then reduces the PAPR of the extended signal 206, and provides a modified signal to be amplified 208.

The PAPR is reduced by processing the extended signal 206 to reduce the amplitude of a maximum peak 210 in the signal. This process is sometimes referred to as clipping. The processing creates signal artefacts, sometimes referred to as clipping noise. The artefacts are provided in the out-of-band spectrum frequencies of the extended signal 206.

Figures 2A, 2B and 2C show a schematic example of clipping, in the time domain. The example of Figures 2A to 2C is illustrative only.

Figure 2A shows an example of a signal 600, having a peak 602 above a desired threshold 604. Figure 2B shows an example of the signal clipping vector 606 generated to reduce the amplitude of the peak 602. Figure 2C shows the output signal 608 resulting from applying the signal clipping vector 202 to the input signal 206.

In the output signal 608, the peak 602 has a reduced amplitude compared to the original signal 600 in Figure 2A, and the peak 602 is reduced below the threshold 604. It will be appreciated that when the output signal 608 is reviewed in the frequency domain, extra components will be present. These extra components are formed by the clipping vector 606 and are the clipping noise or clipping artefacts.

The first step of the method 100 for reducing the PAPR of a multi-carrier signal is to make out-of-band spectra available 101. The resulting signal is referred to as an extended signal 206. The extended signal 206 has frequency-components available outside of the bandwidth defined for the input signal 200. These components are referred to as the out-of-band spectra. Prior to making out-of-band frequencies available 101, the signal 200 does not exist outside the defined bandwidth. After making out-of-band frequencies available 101, the bandwidth of the extended signal 206 has now been increased, as a result of the out-of-band spectra.

Any suitable method can be used for making bandwidth available to form the extended signal 206. In one example, the out-of-band spectra might be obtained by oversampling the input signal 200, and applying zeros to the central-part of the IFFT.

The second step of the method 100 is to identify 102 the time and amplitude of the peak amplitude 210 in the extended signal 206 (in the time domain).

At a third step, a signal clipping vector 202 is generated 104, based on the identified peak 210 of the extended signal 206. The signal clipping vector 202 is a signal that, when applied to the extended signal 206, reduces the amplitude of the peak 210. The signal clipping vector 202 is applied at the appropriate time index and with sufficient amplitude to reduce the amplitude of the peak 210 to below a PAPR threshold 304.

In this example, the PAPR threshold 304 is constant across the signal (both in the time domain and frequency domain).

The signal clipping vector 202 is provided at the correct time index in relation to the extended signal 206 by forming it at an appropriate frequency. However, it is forbidden to form the signal clipping vector 202 at frequencies in the in-band part of the signal 206. In other words, in-band sub-carriers (used and unused) provided in the defined bandwidth of the input signal 200 cannot be used for the signal clipping vector 202. As such, the in-band sub-carriers are considered to be banned or forbidden for the signal clipping vector 202.

Instead, the signal clipping vector 202 is formed at frequencies in the out-of-band spectra. In one example, this is achieved by using a transmit spectrum mask (or another kind of mask), which defines the frequencies available for the clipping vector 202, and prevents signal components being formed at forbidden frequencies.

In a fourth step, the signal clipping vector 202 is applied 106 to the extended signal 206, to reduce the magnitude of the identified peak 210, and form a modified output signal 204, with the signal clipping vector 202 in the out-of-band spectra. Therefore, the modified output signal 204 also has increased bandwidth compared to the input signal 200.

After the signal clipping vector 202 has been applied to the extended signal 206, to form the modified signal 204, the method 100 then checks 108 if an end criterion has been reached. If an end criterion has not been reached 108a, the method 100 continues by repeating the steps of identifying the peak 102, generating the clipping vector 104 and applying the clipping vector 106, this time using the modified output signal 204.

The method 100 for reducing the peak-to-average ratio is iterative. For the first iteration, the signal used is the extended signal 206, derived from oversampling the input signal 200. For subsequent iterations, the signal used is the output signal 204 from the previous iteration. Over the iterations, further signal clipping vectors 202 are generated, adding to the artefacts in the out-of-band spectra. No clipping vectors/artefacts are ever provided in the in-band sub-carriers.

If an end criterion has been reached 108b, the method 100 ends by providing 110 the output signal 204 from the previous step 106, as the output signal to be amplified 208.

The output signal to be amplified 208 is provided to an RF-amplifier (not shown). The RF-amplifier can be part of a transmitter or receiver (not shown). It will be appreciated that the amplifier (not shown) must have sufficient operating bandwidth to accommodate the increased bandwidth of the output signal 208 compared to the input signal 200.

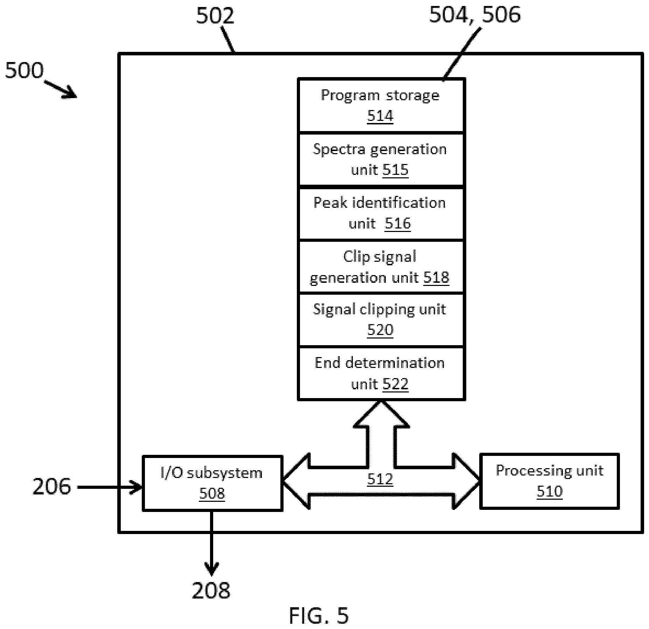

The method 100 is carried out by a PAPR apparatus 500, as shown in Figure 5. The PAPR apparatus 500 includes processing circuitry 502. The processing circuitry 502 includes a hard drive 504, memory 506, an I/O subsystem 508, and a processing unit 510. The hard drive 504, memory 506, I/O subsystem 508, and processing unit 510 communicate with each other via a system bus 512.

The processing unit 510 may be any suitable processor, and the system bus 512 may include any suitable system bus.

It will be appreciated that although reference is made to a memory 506, it is possible that the memory could be provided by a variety of devices. For example, the memory 506 may be provided by a cache memory, a RAM memory, a local mass storage device such as the hard disk 504, any of these connected to the processing circuitry 510 over a network connection. However, the processing unit 510 can access the memory via the system bus 512 to access program code to instruct it what steps to perform. The processing unit 510 is arranged to process the data as outlined by the program code.

Figure 5 shows a schematic diagram of the memory 506. The memory 506 comprises a program storage portion 514 dedicated to program storage. The program storage portion comprises a spectra generation unit 515, a peak identification unit 516, a clip signal generation unit 518, a signal clipping unit 520, and an end determination unit 522.

The spectra generation unit 515 generates the out-of-band frequency-components in the input multi-carrier signal 200, resulting in the extended signal 206. The peak identification unit 516 determines the location and amplitude 102 of the maximum peak 210, the clip signal generation unit 518 generates 104 the signal clipping vector 202, the signal clipping unit 520 applies 106 the signal clipping vector 202 to the input signal 206, and the end determination unit 522 determines if an end criterion has been reached 108. The end determination unit 522 may include an iteration counter.

In general, the signal to be amplified 200 is received through the I/O subsystem 508. The input signal 200 is then processed, and the output signal 208 is provided to an RF-amplifier (not shown) through the I/O subsystem.

In one example, the input signal to be amplified 200 may be provided from signal generation or signal emulation circuitry, and provided to a transmitting antenna after amplification. In another amplification, the signal to be amplified 200 may be received from a receiving antenna, and then provided for further processing after amplification. The PAPR apparatus may be part of the RF-amplifier, or the transmitter or receiver including the RF-amplifier.

The method 100 can determine that an end criterion has been reached 108 if all peaks in the signal 204 are reduced below the PAPR threshold 304. Therefore, it will be appreciated that, in some situations, there may only be a single iteration. Alternatively, the method 100 can determine that an end criterion has been reached after a predetermined number of iterations, for example, 10 iterations, 100 iterations, 1000 iterations or any other number of iterations. The method 100 can also determine an end criterion has been reached if there is no further reduction in the PAPR. In some examples, this criterion may be reached if the PAPR stays constant for a predetermined number of iterations (for example, one or more iterations). In other examples, this criterion may be reached if the PAPR increases, or reduces by an amount below a threshold for a predetermined number of iterations.

In some examples, only one of the end criteria may be applied. However, in other examples, all or some of the criteria may be applied, in a hierarchical order. For example, if all peaks are sufficiently reduced before the threshold number of iterations is reached, the method is stopped, or the method is stopped at the threshold number of iterations, regardless of the peak values.

The signals shown in Figures 2A to 2C are simplified signals shown for illustrative purposes only. Figure 3A shows the spectral density of an input multi-carrier input signal 200 that is compliant with, for example, the IEEE802.11x standard.

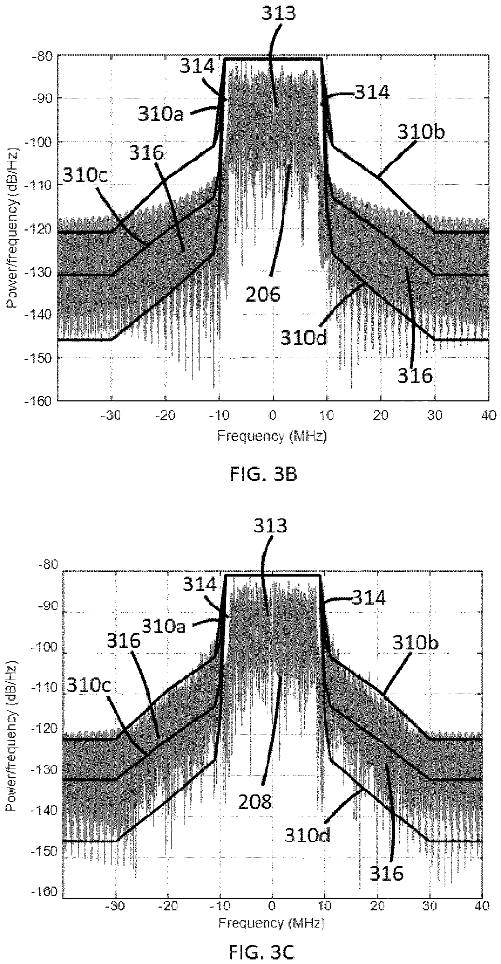

Figure 3B shows the spectral density of the multi-carrier signal after oversampling by a factor of four, and Figure 3C shows the multi-carrier spectral density after PAPR reduction by signal clipping. The x-axis shows the variation from the central frequency of the signal.

In the examples shown in Figures 3A to 3C, the bandwidth of the signal is defined as $\pm 10$MHz from the central frequency (0). The data payload 313 of the signal is carried between $\pm 8$MHz, with the unused sub-carriers below - 8MHz and above +8MHz.

The solid lines in Figures 3A to 3C show different examples of transmit spectrum masks 310 that define how much power can be provided at different frequencies for a signal. The masks 310 are specified by the appropriate signal standard or regulations, and limit the interference between neighbouring carriers. The different masks represent different signal classifications with different allowed level if interference. For example, outside the defined bandwidth, the fourth mask 310d has the lowest power, meaning it has the lowest interference between neighbouring carriers.

The masks 310 may also be used to control placement of the signal artefacts in the method 100 discussed above. The signal artefacts must be placed such that they are (i) outside the defined bandwidth of the signal and (ii) below the transmit spectrum masks 310.

Across the majority of the defined bandwidth for the signal, all the masks 310a-d are flat and allow the maximum transmission. The allowed power of the masks linearly reduces below -9MHz and above +9MHz.

At frequencies between +9MHz and +30MHz, each mask 310 includes three different regions where the allowed power transmission linearly reduces with increasing frequency. Each of the three regions has different gradient, and each of the different masks 310a-d allows a different amount of power through. Above +30MHz, the allowed transmission is flat, and again, each mask 310 allows different levels of power to be transmitted. From +30MHz, the amount of power transmitted is considered negligible, compared to the payload 313.

Below -9MHz, the masks 310 follow the mirror of the mask above +9MHz, as a function of decreasing frequency. Therefore, the masks 310a-d are symmetrical about 0MHz.

As can be seen by comparison of Figure 3B and 3C, the process of clipping the maximum peaks creates high out-of-band spectral density. Therefore, the signal in the out-of-band frequency-components is increased in a controlled manner, according to the transmit spectrum mask. However, the in-band sub-carriers from the input signal 200 are unchanged, and the data payload 313 is unaffected.

The tapering of the masks 310 ensures that, even with the clipping artefacts, the signal power decreases away from the defined bandwidth of the input signal. Therefore, spacing between different signals, with different defined carriers is maintained, and the interference between neighbour-signals at different RF-carrier-frequencies is minimised. In order to maintain independence of neighbouring carriers, the mask will have an absolute limit between a lower and upper bound. The lower bound (third frequency) will be below the lower frequency of the bandwidth, and the upper bound (fourth frequency) will be above the upper frequency of the bandwidth.

Typically, as a result of the masks 310, the clipping artefacts are provided at out-of-band frequencies closest to the bandwidth of the input signal 200. However, provided the placing of the artefacts is compliant with the mask, the artefacts may be placed at any frequency.

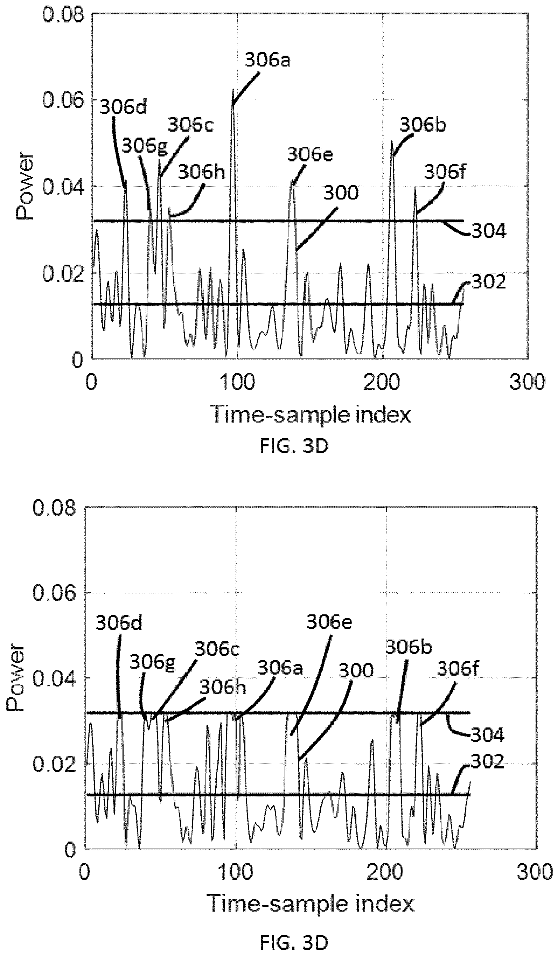

Figures 3D illustrates a further example of an input signal 300 with a high PAPR, shown in the time domain. The average power 302 of the signal is shown by the lower horizontal line on the plot. The signal is a 3.2 microsecond time slice. The signal is an orthogonal frequency-division multiplexing (OFDM) multi-carrier signal having an in-band part that is used for the signal and an out-of-band part that needs to comply with the transmit spectrum mask. The signal may be, for example, defined by the IEEE802.11x where x means different IEEE802.11 standards, for example IEEE802.11a, IEEE802.11b, IEEE802.11g, etc.

OFDM systems are block-based systems, each block, for example having a length of N complex time domain samples ($x_i$), or N frequency domain samples ($X_i$). In the IEEE 802.11x standard, blocks of unused sub-carriers are defined at the highest and lowest in-band frequencies.

An OFDM symbol that is compliant with the IEEE802.11x standard may be represented by a signal vector ($\underline{x}$ in the time domain, $\underline{X}$ in the frequency domain), given by:

$$\underline{x} = [x_1, \cdots, x_n, \cdots, x_N], \qquad n \in [1, \cdots, N] \qquad \text{(1a)}$$

$$x_n = F^{-1}\{\underline{X}\} = F^{-1}\{[X_1, \cdots, X_k, \cdots X_N]\}, \quad k \in [1, \cdots, N] \qquad \text{(1b)}$$

Where F is the discrete Fast Fourier transform (FFT) matrix. The PAPR for each such OFDM-symbol is given by:

$$\text{PAPR} \overset{\text{def}}{=} \frac{\max_n |x_n|^2}{E\{|x_n|^2\}}, \qquad n \in [1, \cdots, N] \qquad \text{(2a)}$$

$$\text{PAPR}|_{\text{dB}} \overset{\text{def}}{=} 10 \log_{10} \frac{\max_n |x_n|^2}{E\{|x_n|^2\}} \qquad \text{(2b)}$$

$$= 10 \log_{10} \max_n |x_n|^2 - 10 \log_{10} E\{|x_n|^2\}, \qquad n \in [1, \cdots, N]$$

In one example, there may be 64 sub-carriers (N = 64) for the in-band part of the spectrum, of which 11 are not used for the data payload.

The out-of-band spectra becomes available with oversampling. In one example, the oversampling may be by a factor of 2. Alternatively, the oversampling factor may be higher. The size of the out-of-band spectra becomes (T-1)*N*Fsub with T the oversampling-factor.

As shown in Figures 2A to 2C, the effect of one clip on a peak is an impulse at the position of the clip, d, which has a clipping-amplitude $\alpha_d$ equal to the amount the signal is over the PAPR threshold at that position. The clipped time-domain signal-vector, $y[n]$, can be decomposed into the unclipped signal, $y_s[n]$, and the clip signal, $y_c[n]$:

$$y[n] \overset{\text{def}}{=} y_s[n] + y_c[n] = y_s[n] + \alpha_d \cdot \delta[n-d], \qquad n \in [1, \cdots, P] \qquad (3)$$

where $\delta[\cdot]$ is the Kronecker-delta function, n is the index of the time sample and *P = TN.*

The sum of the impulse due to the clip signal and the original vector is transformed to the frequency-domain by an FFT-operation. Based on the linearity-property of the FFT, the FFT can be given as:

$$\begin{aligned} Y[k] &\overset{\text{def}}{=} \mathrm{F}\{y[n]\} = \mathrm{F}\{y_s[n] + y_c[n]\} \\ &= \mathrm{F}\{y_s[n]\} + \mathrm{F}\{y_c[n]\} \overset{\text{def}}{=} Y_s[k] + Y_c[k], \qquad k \in [1, \cdots, P] \end{aligned} \qquad (4)$$

Setting the N in-band sub-carriers used for data payload and non-payload unused sub-carriers in *Y[k]* to their original values $Y_s[k]$, is (approximately) equivalent to doing nothing to $Y_s[k]$, and setting these N in-band sub-carriers to zero in $Y_c[k]$ and the (T-1)*N out-of-band subcarriers to non-zero values, e.g., piece-wise linear values to comply with the transmit spectrum mask. Therefore, the FFT can be approximated to:

$$\tilde{Y}[k] \overset{\text{def}}{=} Y_s[k] + Y_c[k] \Big|_{\text{set to zero}}^{\text{piecewise linear}} \qquad (5)$$

Setting all of the N in-band sub-carriers to zero in $Y_c[k]$ and the (T-1)*N out-of-band subcarriers to, for example, piece-wise linear values to comply with the transmit spectrum mask is equivalent to multiplying the FFT of the clip FFT by a function, *S[k],* which is zero for the N in-band subcarriers and, for example, piecewise linear otherwise. This is the out-of-band shaping-function. The inverse FFT (IFFT) of the out-of-band shaping function is the time domain shaping function. Using the out-of-band shaping function, the clipped signal can be approximated as:

$$\tilde{Y}[k] = Y_s[k] + Y_c[k] \times S[k] \qquad (6)$$

The multiplication of the clipped signal in the frequency domain, and the out-of-band shaping function should approximate the clipped signal in the time domain $y_c[n]$.

Performing an IFFT on the clipped signal in the frequency domain yields an approximation of the clipped signal in the time domain:

$$\begin{aligned} \tilde{y}[n] &\overset{\text{def}}{=} \mathrm{F}^{-1}\{\tilde{Y}[k]\} = \mathrm{F}^{-1}\{Y_s[k] + Y_c[k] \times S[k]\} \\ &= \mathrm{F}^{-1}\{Y_s[k]\} + \mathrm{F}^{-1}\{Y_c[k] \times S[k]\} \\ &= y_s[n] + y_c[n] \circledast s[n] \end{aligned} \qquad (7)$$

Where $\circledast$ means circular convolution.

The circular convolution of the clip signal and the shaping function gives the signal clipping vector 202 used in the method 100.

By evaluation of equation (3), and substitution into equation (7), the effect of a clip is to add the shaping function, scaled by the clip-amplitude and circularly shifted to the location of the clip:

$$\tilde{y}[n] = y_s[n] + y_c[n] \circledast s[n]$$
$$= y_s[n] + \alpha_d \cdot \delta[n-d] \circledast s[n] \qquad (8)$$
$$= y_s[n] + \alpha_d \cdot s[n-d]$$

The clip signal $y_c[n]$ includes in-band frequency-components of the OFDM-signal. Multiplication of this clipped signal by the out-of-band shaping function to yield the signal clipping vector 202 limits the clip signal to the out-of-band frequency-components. However, the signal clipping vector 202 is an approximation of the original clip signal. Therefore, it may not have the same effect on the unclipped signal as the clip signal. For example, the peak may not be reduced by such a large magnitude, or other peaks may have increased the plot. The signal is

The approximated clip signal can be generated in any suitable manner. For example, this approximated clip signal may be generated from look-up tables, or may be calculated from the original signal.

In each iteration of the method 100 of Figure 1, a signal clipping vector is generated to reduce the magnitude of the maximum peak only, and no other peaks are detected. Therefore, once the maximum peak is detected, the detection process is stopped, and the method 100 moves on to generating 104 the signal clipping vector 202 based on the FPA-method. This process is called the Modified Maximum Fourier Projection Algorithm (MMFPA).

Figure 3E shows the reduced PAPR signal 308 derived from the processing of the signal of Figure 3D, in accordance with the method 100 of Figure 1. The average power 302 is also shown on Figure 3E. The signal 308 of Figure 3E is calculated from 1500 iterations of the method 100. Comparison of Figure 3D and Figure 3E shows a number of features:

- Before the MMFPA, eight peaks 306 are above the PAPR threshold 304, and the PAPR is 6.92dB;
- After the MMFPA, the peaks 306 are significantly reduced in amplitude, and the PAPR is reduced to 3.95dB. This reduction of 2.97 dB allows an RF-amplifier amplifying the signal to operate at reduced back-off; and

It is not only the peaks above the PAPR threshold 304 that have been altered. The clipping also alters the other peaks, but the content of the data payload is unchanged. This is because the signal clipping vector 202 in each iteration is an approximation of the clip signal without in-band frequency-components, which are not allowed to use.

In the above example, only the maximum peak is identified on each iteration of the method 100. In other examples, more than just the maximum peak may be processed in each iteration. For example, the signal clipping vector 202 may be generated to reduce the amplitude of the highest two peaks, the highest three peaks or more. Alternatively, the method 100 may look at the highest peak, and the third highest peak, or other similar variations. As discussed above, only the peaks required for the processing are detected. Once the required peaks are detected, the detection process is stopped, and no other peaks are found.

Where more than just the maximum peak is found, the signal clipping vector 202 generated in each iteration is designed to reduce the value of all peaks above the PAPR threshold 304. This process is referred to as the Modified FPA (MFPA). The MFPA process still uses the out-of-band spectra for the clipping artefacts, with the in-band sub-carriers forbidden.

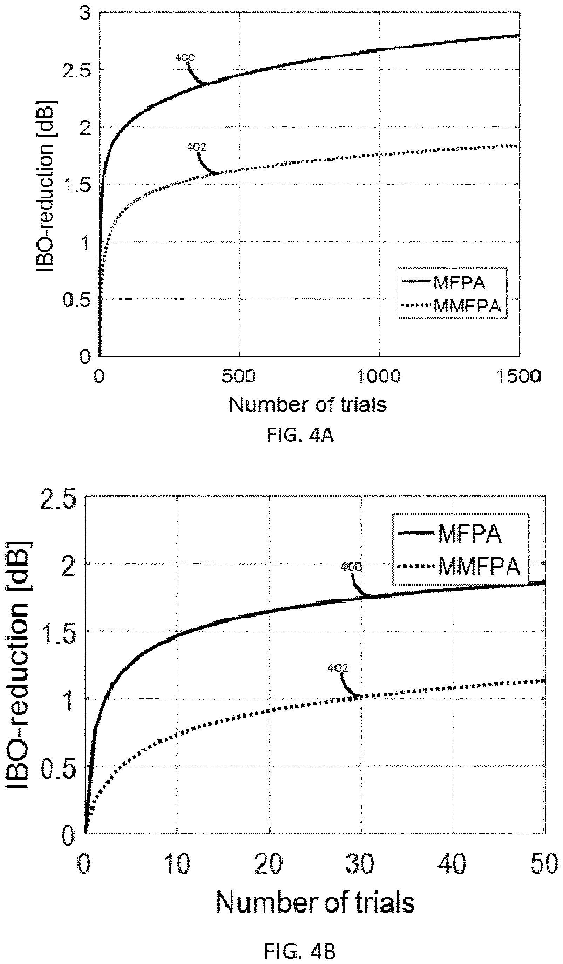

Figure 4A shows the input back-off (IBO) reduction that can be achieved for an RF-amplifier amplifying a signal with the PAPR reduced by the MMFPA or MFPA, as discussed above. The IBO reduction is shown as a function of the number of iterations (trials) up to fifteen hundred iterations. A first curve 400 is the result for the MFPA, while the second 402, is for the MMFPA. The back-off reduction is based on an RF-amplifier with an initial back-off of 8dB, and a PAPR-threshold of 4dB. The mask used is the second mask (class "B") 310b in figures 3B and 3C.

Over a fixed number of iterations, the MFPA provides a larger back-off reduction than the MMFPA. Furthermore, both techniques show an exponential behaviour for the reduction, such that the largest reduction in back-off is for the first few trials. Figure 4B shows the IBO reduction for the first 50 trials, in more detail.

From Figure 4B, it can be seen that in 2 iterations, the MFPA reaches an IBO-reduction $\approx 1.0$dB, which is a common requirement for the PAPR-reduction algorithms. In 2 iterations, the IBO reduction achieved by the MMFPA is $\approx 0.35$dB. To achieve an IBO reduction of $\approx 1.0$dB, the MMFPA requires 25 iterations. In the same number of iterations, the MFPA can reach an IBO reduction of $\approx 1.85$dB.

Furthermore, with the same number of trials the MMFPA introduces more noise than the MFPA, as demonstrated by the MMFPA curve 402 being below the MFPA curve 400. However, the MFPA requires more corrections per iteration than the MMFPA, making the MFPA significantly more complex. The MFPA is also more complex because more peaks have to be detected. In the MMFPA, only a fixed number of peaks is used, whilst in MFPA, all peaks above the PAPR threshold are used. The lower complexity of the MMFPA results in low processing requirements. This saving is maximised when only the maximum peak is considered in each iteration. Furthermore, neither MMFPA nor MFPA require significant memory, as they use the outputs from previous iterations as the inputs for the next iteration, and are not required to store the original input signal 200 to be amplified.

Based on the above, there will be situations where the MFPA technique is advantageous, and other situations where the MMFPA technique is advantageous. Where it is desired to achieve high levels of IBO reduction, and/or low levels of clipping noise and/or processing power is not a significant factor, then the MFPA is used. However, where processing power is limited, and/or a lower level of IBO reduction is required or sufficient, the MMFPA is used.

In the example described above, each iteration uses the same process (the MMFPA or MFPA). However, it will be appreciated that in other examples, some iterations may use the MFPA, and other iterations may use the MMFPA.

The above examples are described with respect to the IEEE802.11x wireless standard. However, it will be appreciated that the input signal 200 to be amplified may be any suitable signal 200 in which out-of-band frequency-components may be generated below a transmit spectrum. This may be referred to as controlled spectral growth. The signal 200 may be compliant with any suitable standard. In the above example, the signal 200 includes unused in-band sub-carriers. However, it will be appreciated that this need not necessarily be the case.

In the examples discussed above, oversampling is used to provide out-of-band spectra. However, it will be appreciated that any process which generates out-of-band spectra may be used.

In the examples discussed above, the PAPR threshold is constant as a function of time and frequency. However, it will be appreciated that in some examples, the PAPR threshold may vary as a function of frequency and/or time. The variation can be linear or non-linear. In some examples, the variation can be based on the transfer function of the RF-amplifier that is used to amplify the PAPR reduced signal to be amplified 208.

Where the PAPR threshold 304 varies as a function of the RF-amplifier transfer function, a further end criteria may be used, based on the means square error of the signal. In this case, the iterative method 100 may be stopped if the mean square error is below a threshold value.

In the above examples, the extended signal 206 is analysed to detect the time and amplitude of the maximum signal(s). However, it will be appreciated that in the first iteration, the time and amplitude of the maximum signal(s) may be detected in the input signal 200, before the out-of-band spectra is provided (for example by oversampling).

In the examples discussed above, the clipping noise is formed entirely in the out-of-band frequency-components and the in-band subcarriers are forbidden to be used. It will be appreciated that in some examples, the clipping noise may be formed of only one out-of-band frequency-component, or in other examples, more than one out-of-band frequency-component. The clipping noise may have a varying amplitude as well as a constant one, e.g., piece-wise linear, across the out-of-band frequency-components. Furthermore, it is forbidden for the clip signal to be placed in any in-band sub-carriers either unused, used.

The masks 310 discussed above and shown in Figures 3A to 3E are given by way of example only. Any suitable mask shape may be used. Typically, the mask will include a region of high, constant transmission in the region of the bandwidth of the input signal, and gradual reduction in transmission away from the bandwidth of the input signal. However, this is by way of example only. In the above examples, the masks 310 are defined by the standards or regulations governing the signals. However, this may not necessarily be the case, and different masks may be used. For example, the mask may be dedicated for the purpose of governing placement of clipping noise. This may be set based on other system requirements (for example bandwidth of other components, desired bandwidth and the like).

It will further be appreciated that although the examples discussed above and shown in Figures 2A to 2C, and 3A to 3D only discuss the signal and PAPR in terms of a positive signal, and peaks above the PAPR threshold, the signals may also include a negative component and a negative PAPR threshold. In general, it should be considered that the method 100 reduces the absolute value of the peaks above the PAPR threshold.

The PAPR apparatus 500 shown in Figure 5 and discussed above is shown by way of example only. Any suitable apparatus may be used for carrying out the method 100, and various different apparatuses and modification will be apparent to the person skilled in the art.

From reading the present disclosure, other variations and modifications will be apparent to the skilled person. Such variations and modifications may involve equivalent and other features which are already known in the art, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of reducing the peak-to-average power ratio of a multi-carrier signal, wherein the multi-carrier signal includes a plurality of in-band sub-carriers in a defined frequency band, between a first frequency and a second frequency, wherein a data payload is delivered in payload sub-carriers, the payload sub-carriers being a sub-set of the plurality of in-band sub-carriers, the method including:

   processing an input multi-carrier signal carrying a data payload to form an extended signal with out-of-band spectrum available, outside the defined frequency band;
   detecting a location and value of the maximum amplitude peak of the extended signal, in the time domain; and processing the extended signal, based on the detected location and value of the maximum amplitude peak, in order to reduce the value of the maximum amplitude peak below an amplitude threshold, to form a modified multi-carrier signal, such that the modified multi-carrier signal carries the data payload from the input multi-carrier signal, and has a lower peak-to-average power ratio than the input multi-carrier signal;

   wherein processing the extended signal generates signal artefacts; and wherein the signal artefacts are only provided in frequencies outside the defined frequency bandwidth of the input signal.

2. The method of claim 1, wherein it is forbidden to use the in-band sub-carriers for the signal artefacts.

3. The method of claim 1, or claim 2, wherein processing the extended signal in order to reduce the value of the maximum amplitude peak below an amplitude threshold comprises:

   applying a transmit spectrum mask to define the frequency of the signal artefacts.

4. The method of claim 3, wherein the transmit spectrum mask defines a threshold power amplitude; and wherein the transmit spectrum mask allows power to be transmitted below the threshold power amplitude, such that it limits the amplitude of the modified multi-carrier signal.

5. The method of claim 4, wherein the power transmitted according to the transmit spectrum masks varies as a function of frequency for at least a range of frequencies, and decreases away from the first frequency and the second frequency.

6. The method of claim 4 or claim 5, wherein the transmit spectrum mask includes one or more portions where the power transmitted according to the mask decreases linearly away from the first frequency; and one or more portions where the power transmitted decreases linearly away from the second frequency.

7. The method of any preceding claim, wherein processing an input multi-carrier signal carrying a data payload to form an extended signal comprises oversampling the input multi-carrier signal.

8. The method of claim 7, wherein processing an input multi-carrier signal carrying a data payload to form an extended signal comprises oversampling the input multi-carrier signal by a factor of two or more.

9. The method of any preceding claim, including:

   detecting a location and value of two or more peaks in the extended signal, in the time domain; and processing the extended signal, based on the detected location and value of the detected peaks, in order to reduce the amplitude of the detected peaks below an amplitude threshold, to form the modified multi-carrier signal,

   wherein signal artefacts from the processing are only provided in frequencies outside the defined frequency bandwidth of the input signal.

**10.** The method of any preceding claim,

wherein at least some of the plurality of in-band sub-carriers are null carriers, not used for delivering the data-payload.

**11.** A method of amplifying a multi-carrier signal, the method comprising:

receiving a multi-carrier input signal, the multi-carrier input signal having a peak-to-average power ratio;
reducing the peak to average power ratio of the received multi-carrier signal according to the method of any preceding claim, to form an amplifier input signal; and
amplifying the amplifier input signal,

wherein the amplifier is operated at back-off.

**12.** A peak to average power reduction apparatus configured to perform the method of any of claims 1 to 10.

**13.** An amplifier comprising the peak to average power reduction apparatus of claim 12, wherein the amplifier is configured to perform the method of claim 11, and wherein an operational bandwidth of the amplifier is at least twice the bandwidth of the input signal.

**14.** A computer readable storage medium comprising instructions which cause an apparatus to perform the method of any of claims 1 to 11.

**15.** A multi-carrier signal having a peak to average power ratio reduced in accordance with the method of any of claims 1 to 10.

FIG. 1

FIG. 2A          FIG. 2B          FIG. 2C

FIG. 3A

FIG. 3B

FIG. 3C

FIG. 3D

FIG. 3D

FIG. 4A

FIG. 4B

500 ↙  502  504, 506

Program storage
514

Spectra generation
unit 515

Peak identification
unit 516

Clip signal
generation unit 518

Signal clipping unit
520

End determination
unit 522

206 →  I/O subsystem
508

512

Processing unit
510

208

FIG. 5

17

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/191110 A1 (BRECHER LIRAN [IL] ET AL) 30 June 2016 (2016-06-30)<br>* figures 3-5 *<br>* paragraphs [0018], [0022] - [0027] *<br>----- | 1-15 | INV.<br>H04L27/26 |
| X | ARMSTRONG J ED - INSTITUTE OF ELECTRICAL AND ELECTRONICS ENGINEERS: "NEW OFDM PEAK-TO-AVERAGE POWER REDUCTION SCHEME", CONNECTING THE MOBILE WORLD : PROCEEDINGS / IEEE VTS 53RD VEHICULAR TECHNOLOGY CONFERENCE, SPRING, 2001; [IEEE VEHICULAR TECHNOLGY CONFERENCE], IEEE SERVICE CENTER, USA,<br>vol. CONF. 53, 6 May 2001 (2001-05-06), pages 756-760, XP001067062,<br>DOI: 10.1109/VETECS.2001.944945<br>ISBN: 978-0-7803-6728-9<br>* section 2 and section 3.1 *<br>----- | 1-15 | |
| X | WEIWEI KANG ET AL: "Optical Power Reduction for Multiple-Subcarrier Modulated Indoor Wireless Optical Channels",<br>COMMUNICATIONS, 2006. ICC '06. IEEE INTERNATIONAL CONFERENCE ON, IEEE, PI,<br>1 June 2006 (2006-06-01), pages 2743-2748, XP031025480,<br>ISBN: 978-1-4244-0354-7<br>* section II *<br>----- | 1-15 | TECHNICAL FIELDS SEARCHED (IPC)<br><br>H04L |

-/--

The present search report has been drawn up for all claims

| Place of search | Date of completion of the search | Examiner |
|---|---|---|
| Berlin | 14 February 2018 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROJO G ET AL: "Peak-to-average power ratio (PAR) reduction for acoustic OFDM systems", OCEANS 2009, MTS/IEEE BILOXI - MARINE TECHNOLOGY FOR OUR FUTURE: GLOBAL AND LOCAL CHALLENGES, IEEE, PISCATAWAY, NJ, USA, 26 October 2009 (2009-10-26), pages 1-7, XP031643221, ISBN: 978-1-4244-4960-6 * page 1, right-hand column, paragraph 1 * * page 1, right-hand column, last paragraph * * section V * ----- | 1-15 | |

TECHNICAL FIELDS
SEARCHED        (IPC)

The present search report has been drawn up for all claims

| Place of search | Date of completion of the search | Examiner |
|---|---|---|
| Berlin | 14 February 2018 | Feng, Mei |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

**EP 3 447 982 A1**

## ANNEX TO THE EUROPEAN SEARCH REPORT
## ON EUROPEAN PATENT APPLICATION NO.

EP 17 18 8008

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2018

| Patent document cited in search report | Publication date | Patent family member(s) | Publication date |
|---|---|---|---|
| US 2016191110 A1 | 30-06-2016 | CN 105743834 A<br>US 2016191110 A1 | 06-07-2016<br>30-06-2016 |

EPO FORM P0459

For more details about this annex : see Official Journal of the European Patent Office, No. 12/82